# EUROPEAN PATENT APPLICATION

(11) **EP 4 471 180 A1**
(43) Date of publication of application: **04.12.2024**
(21) Application number: 23745040.8
(22) Date of filing: 11.01.2023
(51) Int. Cl.: C23C 24/04, B22F 3/087, B22F 5/00, C22C 9/06, F16C 33/12

(54) **SLIDING MEMBER AND INTERNAL-COMBUSTION ENGINE EQUIPPED WITH SLIDING MEMBER**

(30) Priority: 26.01.2022 JP 2022010235
(71) Applicant: NISSAN MOTOR CO., LTD., Kanagawa 221-0023 (JP); Fukuda Metal Foil & Powder Co., Ltd., Kyoto 600-8435 (JP)
(72) Inventor: IZAWA, Yoshinori, Atsugi-shi, Kanagawa 243-0123 (JP); OTOBE, Katsunori, Kyoto-shi, Kyoto 607-8305 (JP); NISHIMURA, Shinichi, Kyoto-shi, Kyoto 607-8305 (JP)
(74) Representative: Global IP Europe Patentanwaltskanzlei
(86) International application number: PCT/JP2023/000387
(87) International publication number: WO 2023/145424

(57) **Abstract**

In the sliding member of the present invention, a coating film made of a particle aggregate is provided on a base material surface.

The particle aggregate contains copper-based alloy particles, which have copper (Cu) as a main component and contain 3.5% by mass or more of nickel (Ni) and 0.001% by mass or more of silicon (Si), and in which a component ratio of Ni to Si (Ni/Si) is 5 to 50000 (inclusive), and
the copper-based alloy particles contain a precipitate of nickel silicide in a matrix containing at least copper and nickel. Therefore, it is possible to provide: a sliding member in which the strengthening effects of both solid-solution strengthening and precipitation strengthening can be obtained, hardness at high temperatures is high, and wear resistance is improved; and an internal combustion engine provided with said sliding member.

## Description

### Technical Field

The present invention relates to a sliding member, and more specifically relates to a sliding member suitable for use in a high-temperature environment such as that of an internal combustion engine, and an internal combustion engine provided with said sliding member.

### Background Technology

It is known to spray metal particles on a base material surface, bond the metal particles to the base material surface via kinetic energy of the metal particles, cover the base material surface with an aggregate of the metal particles, and improve wear resistance of a sliding member.

Patent Citation 1 discloses a sliding member having a coating film formed of a particle aggregate containing precipitation-hardened copper alloy particles in which supersaturated solid-solution particles have been sprayed onto a base material by cold spraying, and components exceeding a solid solubility limit have been precipitated out by stress caused by shock when the particles collide with the base material, local heat generation, etc.

### Prior Art Documents

### Patent Citations

Patent Citation 1: Japan Patent No. 6519962

### Summary of the Invention

### Problems to be Solved by the Invention

In the coating film of Patent Citation 1, since soft supersaturated solid-solution particles are sprayed in a solid phase, not only can a dense coating film be formed in which the solid-solution particles readily deform before spraying and bond firmly to the base material, but the particles bonded to the base material become hard precipitation-hardened copper alloy particles. Therefore, the coating film has high wear resistance.

However, the solid solution component precipitates out of the precipitation-hardened copper alloy particles of Patent Citation 1 and the particles as a whole undergo precipitation hardening, while in a matrix, the amount of solid solution component decreases and the composition approaches that of pure copper, reducing the effect of solid-solution strengthening. Therefore, wear resistance at high temperatures is insufficient.

The present invention was devised in view of such problems with the prior art, it being an object of the invention to provide a sliding member that has high hardness and exceptional wear resistance at high temperatures and an internal combustion engine provided with said sliding member.

### Means For Solving the Problems

As a result of earnest research into achieving the above object, the inventors perfected the present invention upon discovering that the strengthening effects of both solid-solution strengthening and precipitation strengthening are obtained by precipitating a precipitate of nickel silicide in a matrix containing copper and nickel.

Specifically, in a sliding member of the present invention, a coating film made of a particle aggregate is provided on a base material surface.

The sliding member is characterized in that: the particle aggregate contains copper-based alloy particles, which have copper (Cu) as a main component and contain 3.5% by mass or more of nickel (Ni) and 0.001% by mass or more of silicon (Si), and in which a component ratio of Ni to Si (Ni/Si) is 5 to 50000 (inclusive); and
the copper-based alloy particles contain a precipitate of nickel silicide in a matrix containing at least copper and nickel.

An internal combustion engine of the present invention is characterized by being provided with the sliding member described above.

### Effect of the Invention

According to the present invention, it is possible to provide a sliding member in which the strengthening effects of both solid-solution strengthening and precipitation strengthening can be obtained, hardness at high temperatures is high, and wear resistance is improved, because a precipitate of nickel silicide is precipitated in a matrix containing copper and nickel.

### Brief Description of the Drawings

Figure 1 is a schematic cross-sectional view of one example of a cross section of a sliding member of the present invention; and
Figure 2 is a schematic enlarged cross-sectional view of one example of a coating film composition.

### Modes for Carrying Out the Invention

A sliding member of the present invention shall be described in detail. In the sliding member, a coating film comprising a particle aggregate is provided on a base material surface. The particle aggregate contains at least copper-based alloy particles, and may contain other hard particles as necessary.

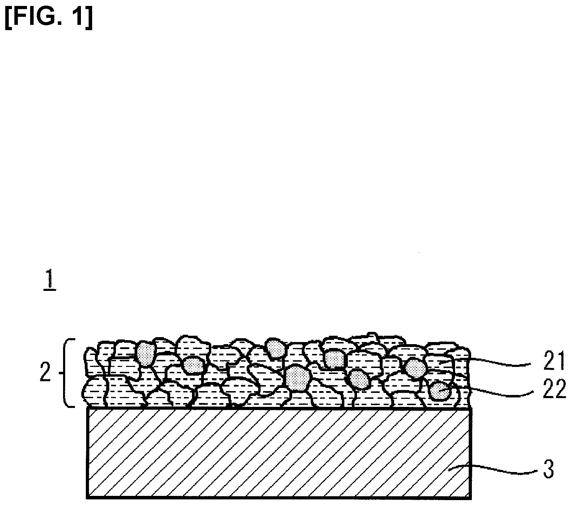

The particle aggregate is formed by locally melting and solidifying the surfaces of the particles whereby adjacent particles do not become one uniform piece, but form an interface of particles bond together. as shown in Fig. 1, and resulting in a particle aggregate integrated to form a coating film layer.

The copper-based alloy particles have copper (Cu) as a main component and contain 3.5% by mass or more of nickel (Ni) and 0.001% by mass or more of silicon (Si), the component ratio of Ni to Si (Ni/Si) being 5 to 50000 (inclusive). The term "main component" in the present invention refers to a component content of 50% by mass or more.

Alloys of copper and nickel are solid-solution-type alloys that form a solid solution at any composition ratio, but if the alloy contains silicon, the nickel in the alloy bonds with the silicon and readily precipitates.

Due to the copper-based alloy particles having a nickel to silicon (Ni/Si) mass ratio of 5 to 50000 (inclusive), some of the nickel precipitates as nickel silicide, but not all of the nickel in the alloy precipitates.

In other words, the nickel in the alloy readily precipitates as nickel silicide (e.g., Ni₂Si) and the nickel silicide mass ratio (Ni/Si) is approximately 106/28; therefore, nickel inevitably remains in the matrix even though nickel precipitates as nickel silicide due to the copper-based alloy particles having a nickel content of at least five times that of silicon.

Thus, the copper-based alloy particles are a solid-solution-strengthened alloy in which a matrix contains copper and nickel, atoms of different size form a solid solution, and the atomic arrangement is strained. Therefore, in addition to strength at the atomic level improving, strength at high temperatures improves because the melting point will be higher than that of pure copper.

In addition, the copper-based alloy particles are also a strained precipitation-strengthened alloy at the crystallite level due to nickel silicide precipitated in the matrix; therefore, no low-strength portions will exist because all of the copper-based alloy particles are strained, coupled with the strain at the above-mentioned atomic level.

Therefore, the copper-based alloy particles have improved strength at high temperatures and improved wear resistance because the strengthening effects of both solid-solution strengthening and precipitation strengthening are obtained.

The mass ratio of Ni to Si (Ni/Si) in the copper-based alloy particles is preferably 7 to 100 (inclusive). Due to the amount of nickel being 7 times or more of the amount of silicon, the nickel content of the matrix increases, the effect of the solid-solution strengthening increases, and the matrix improves in strength.

The copper-based alloy particles preferably contain 0.002% by mass or more of silicon, and more preferably 0.5 to 1.3% by mass (inclusive).

Due to the silicon content being 0.002% by mass or more, the amount of precipitated nickel silicide increases and the effect of the precipitation strengthening therefore increases. If the silicon content exceeds 1.3% by mass, hardness of raw material particles may be too high and film-forming conditions may become more restrictive when a coating film is formed by cold spraying (described hereinafter).

The copper-based alloy particles preferably have a nickel content of 10 to 35% by mass (inclusive). As the nickel content increases, the copper-based alloy improves in strength, but the strength of the matrix increases due to solid-solution strengthening, and when a coating film is formed by cold spraying, the hardness of the raw material particles may be too high and film-forming conditions may become more restrictive.

For example, when the sliding member of the present invention is applied to a valve seat of an internal combustion engine and a counterpart material is a copper- or nickel-based alloy containing nickel such as in an exhaust valve, the nickel content is preferably 25% by mass or less. A valve/valve seat and members thereof are sliding mechanisms and sliding members, as well as valve-operating mechanisms and valve-operating members, but in the present application, valve-operating mechanisms and valve-operating members are collectively referred to as sliding mechanisms and sliding members.

When the sliding member slides against a counterpart material that contains nickel, and the nickel content exceeds 25% by mass, the coating film and the counterpart material will have greater affinity and adhere to each other more readily, which tends to reduce wear resistance.

The particle aggregate preferably contains hard particles in addition to the copper-based alloy particles. The inclusion of hard particles minimizes displacement between copper-based alloy particles due to stress, improves an overall strength of the coating film, and improves wear resistance.

Possible examples of the hard particles include particles having a Vickers hardness of 700 to 1500 Hv (inclusive), such as iron (Fe)-based alloys, cobalt (Co)-based alloys, molybdenum (Mo)-based alloys, chromium (Cr)-based alloys, nickel (Ni)-based alloys, and ceramics.

Specific examples are hard particles of TRIBALOY^{®} T-400, Stellite^{®}, TRIBALOY^{®} T-700, etc.

### <Method for Manufacturing Sliding Member>

The sliding member described above can be manufactured by using cold spraying to spray raw material particles onto a base material surface and forming a coating film of a particle aggregate.

Solid-solution particles of a copper-based alloy in which silicon is dissolved in a matrix containing copper and nickel can be used as the raw material particles that become the copper-based alloy particles, and if necessary, the hard particles can be mixed with the solid-solution particles.

Cold spraying is a method of forming a coating film by causing raw material particles to collide in a solid phase with a base material in a supersonic flow together with an inert gas without melting or gasifying the raw material particles. Unlike methods of forming a coating film by melting metal particles, such as thermal spraying, cold spraying can minimize changes in the properties of metal particles and oxidation in the coating film due to heat.

In cold spraying, when solid-phase raw material particles collide with a base material, the raw material particles themselves undergo plastic deformation, some of the kinetic energy is converted into thermal energy, the surface of the raw material particles locally melt and solidifies, causing the raw material particles to bond with each other, and the particles become a particle aggregate and form a coating film.

If the raw material particles used in cold spraying are not the above-described solid-solution particles but particles in which nickel silicide has precipitated in advance, the raw material particles do not readily plastically deform even when colliding with a base material or other particles because the raw material particles have already been precipitation-strengthened, and a coating film will not readily form because the raw material particles are unable to absorb the stress of collision and tend to crack or bounce back.

However, if the raw material particles are the above-described solid-solution particles, the particles will be soft and will plastically deform due to collision because the particles have not yet been precipitation-strengthened; therefore, it is possible to form a coating film of a particle aggregate in which the particles have bonded together.

The above-described solid-solution particles plastically deform even if the raw material particles include hard particles; therefore, the hard particles sink into the solid-solution particles, the solid-solution particles and the hard particles can accumulate and bond without any gaps, and a coating film of a particle aggregate can be formed. The hard particle content of the raw material particles is preferably 50% by mass or less, and the hard particle content of the coating film is preferably 20% by area or less.

At this time, since the surface of the raw material particles melts locally, diffusion occurs and precipitates of intermetallic compounds, etc., are generated. However, since the temperatures of the base material and the raw material particles are no higher than the melting point of the raw material particles, the locally melted portions are rapidly cooled, so there is no time for crystal growth of the precipitates, etc.

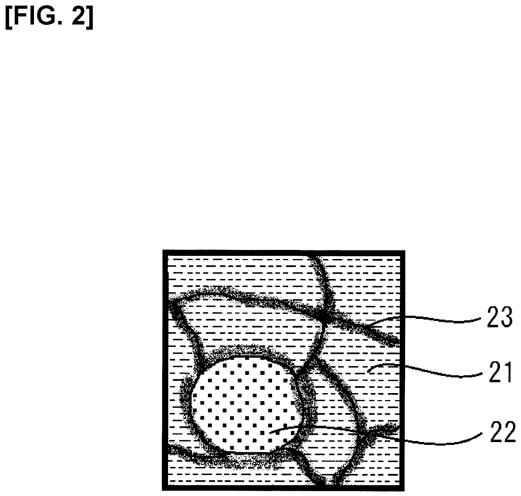

Therefore, nanocrystals and amorphous solids are formed near the bonding interface between the base material and the particles and near the bonding interfaces between the particles, as shown in Fig. 2.

In the present invention, silicon dissolved in the solid-solution particles precipitates together with nickel as nickel silicide due to collision energy, and crystallites having an average particle diameter of 5 to 50 nm are formed.

Thus, the solid-solution particles become precipitation-hardened copper-based alloy particles due to the nickel silicide precipitates, and the inner parts of the copper-based alloy particles near the outer shells are refined into crystallites having an average particle diameter of 5 µm or less due to collision-induced plastic deformation, improving strength.

Since the solid-solution particles of the present invention are provided with solid-solution strengthening by the large nickel content, these particles plastically deform less readily than solid-solution particles that have a small nickel content. Therefore, when spraying particles onto a base material by cold spraying, it is necessary to sufficiently accelerate the solid-solution particles and increase the kinetic energy of one solid solution particle by, *inter alia,* reducing the amount of solid-solution particles supplied.

The solid-solution particles can be produced by water atomization or gas atomization. Specifically, the solid-solution particles can be produced by allowing molten metal having the above-mentioned composition to flow down, atomizing the molten metal by spraying high-pressure water or gas thereon, and solidifying the molten metal by rapid cooling to form particles.

The solid-solution particles preferably have an average diameter (D50) of 20 to 40 *µ*m. A dense coating film can be formed by reducing the average particle diameter of the solid-solution particles, but when particles having too small of a diameter are sprayed, the kinetic energy of the particles will be low, the particles will not plastically deform readily, and there is a risk that adhesion of the particle aggregate will decrease and the strength of the coating film will decrease readily.

The coating film preferably has a porosity of 4% by area or less, more preferably 1% by area or less. Since the solid-solution particles undergo sufficient plastic deformation and are dense with few pores, the strength of the coating film improves and wear resistance improves.

The porosity of the coating film and the average particle diameter (equivalent circle diameter: diameter of a circle having the same area as a projected area of a particle image) of the copper-based alloy particles can be calculated by using image processing to binarize a scanning electron microscope image (SEM image) and analyzing the image.

In the present invention, a cross section of the coating film was imaged in five fields using an SEM composition image with an image field view measuring 350 *µ*m in width by 263 *µ*m in height, the image was binarized using an image-processing device, and the porosity was calculated. In the same image, an area ratio of hard particles was calculated, and an area ratio of the copper-based alloy was obtained as the remainder.

Amorphous solids and crystallites at the interfaces between copper-based alloy particles can be confirmed by projecting a diffraction pattern onto a detector surface via electron backscatter diffraction (EBSD) using a scanning electron microscope (SEM), and analyzing crystal orientation from the projected pattern.

The velocity at which the raw material particles are sprayed is preferably 300 to 1200 m/s, more preferably 500 to 1200 m/s.

A working gas that sprays the raw material particles is preferably at a pressure of 2 to 7 MPa, more preferably 3.5 to 7 MPa. If the pressure of the working gas is lower than 2 MPa, the particle velocity may not be achieved and the porosity may increase.

A temperature of the working gas depends on characteristics of the raw material particles such as type and particle diameter, but is preferably 400 to 1000°C, more preferably 600 to 1000°C. If the temperature of the working gas is lower than 400°C, the raw material particles may be resistant to plastic deformation, the porosity may increase, and wear resistance may decrease. If the temperature of the working gas is higher than 1000°C, the temperature will be too close to the melting point of the raw material particles and the particles will be likely to close off a throat of an ejection nozzle.

Possible examples of the working gas described above include nitrogen gas, helium gas, etc., which may be used singly or together in a mixture.

A thickness of the coating film also depends on a temperature and sliding environment of a location where the sliding member is used; for example, the thickness is preferably 0.05 to 5.0 mm, more preferably 0.1 to 0.5 mm.

If the thickness is less than 0.05 mm, the strength of the coating film may be insufficient, and there may be a risk of causing plastic deformation when a strength of the base material is low. If the thickness is greater than 5.0 mm, there is a risk that the coating film will readily peel off due to a relationship between residual stress occurring at the time of coating film formation and interface adhesion force.

There are no particular limitations on the base material; conventionally used metals can be used as the sliding member of the internal combustion engine but aluminum alloys have high thermal conductivity and are preferable.

Possible examples of the aluminum alloys include, *inter alia,* A5056, A1050, AC2A, AC8A, and ADC12, specified by Japanese Industrial Standards.

Since the sliding member described above has exceptional wear resistance at high temperatures, the sliding member is suitable for use in, for example, internal combustion engine valve seats, valve lifts, pistons, piston rings, piston pins, cylinders, crankshafts, camshafts, connecting rods, metals thereof, etc.

### Examples

The present invention shall be described in greater detail using examples, but the present invention is not limited to the following examples.

### [Example 1]

An aluminum base material (A5056) was mounted on a turntable, and raw material particles in which solid-solution particles (Cu-3.5Ni-0.5Si, average particle diameter (D50): 31.5 *µ*m produced by water atomization and TRIBALOY^{®} T-400 were mixed at a ratio of 50:50 were cold sprayed in the following conditions while the turntable was caused to rotate to form a coating film layer 0.8 to 1.0 mm thick, and finishing was performed using a lathe to obtain a film thickness of 0.4 to 0.5 mm.

| | |
|---|---|
| High-pressure cold spraying device: | PCS-1000 made by Plasma Giken Co., Ltd. |
| Working gas: | nitrogen |
| Working gas temperature: | 600°C |
| Working gas pressure: | 4 MPa |
| Spray distance: | 20 mm |
| Base material rotation speed: | 300 rpm |
| Particle supply rate: | approx. 7 g/min |
| Other: | during processing, a gun was secured in place and powder was supplied until a prescribed film thickness was reached. |

(After a temperature increase outside of the processing location, the gun was driven at 100 mm/sec in the work location, and the powder was supplied with the gun fixed. After the required film thickness was achieved, the powder supply was ended and the gun was driven outside the processing location at 100 mm/sec to complete the processing.)

Coating films of Examples 2 to 8 and comparative Examples 1 to 4 were formed in the conditions of Table 1 below, and the coating films of the examples and comparative examples were evaluated in the following conditions. Table 1 shows the coating film formation conditions and evaluation results together.

### (Vickers Hardness Test)

| | |
|---|---|
| Test piece shape: | 5 mm × 5 mm × 10 mm |
| Test temperature: | 200°C, 300°C, 400°C |
| Number of measurement points: | 5 at each temperature |
| Measurement load: | 500 gf |

### (High-Temperature Wear Test)

| | |
|---|---|
| Test method: | single valve seat tapping wear test (made by Takachiho-Seiki Co., Ltd.) |
| Assumed model: | KR20DDET |
| Test temperature: | 300°C |
| Counterpart valve material: | SUH38 (Ni content: 20% by mass) |
| Number of sittings: | 540,000 (3000 cpm × 3 hr) |
| Evaluation category: | amount of valve seat wear |

### (Quantitative Analysis in Coating Film)

An aqueous solution obtained by dissolving the coating film per unit area with acid was measured by inductively coupled plasma (ICP) mass spectrometry. In Examples 1 to 8, the percentage by mass of Si and Ni in the coating film was the same as that of the raw material particles.

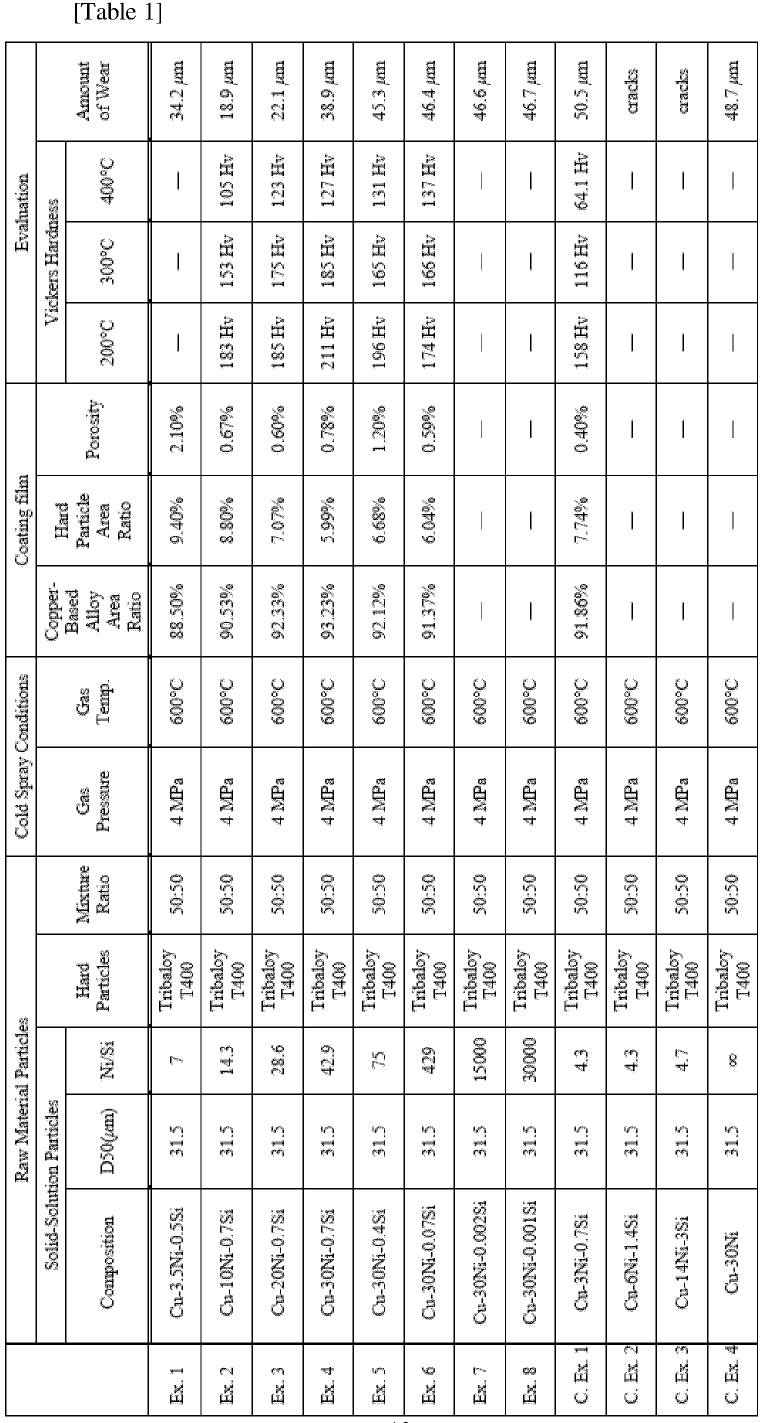

By comparing Examples 2 to 6 and comparative Example 1, it can be seen that the coating film of the present invention has high hardness at high temperatures and exceptional wear resistance.

In Examples 2, 3, and 4, although the copper-based alloy particles have a silicon content of the same, the hardness increases as the nickel content increases; therefore, it can be seen that the matrix is solid-solution-strengthened.

In Examples 4, 5, and 6, although the copper-based alloy particles have the same nickel content, the hardness increases as the silicon content increases, and it can therefore be seen that precipitation hardening results in strengthening.

From the comparison of Examples 2, 3, and 4, it can be seen that adhesive wear occurs when the counterpart material contains nickel because wear resistance increases in Example 4, in which the copper-based alloy particles have a nickel content of exceeds 25% by mass.

### Key to Symbols

- 1: Sliding member
- 2: Coating film
- 21: Copper-based alloy particles
- 22: Hard particles
- 23: Amorphous solid • nanocrystals
- 3: Base material

## Claims

1. A sliding member comprising a coating film made of a particle aggregate provided on a base material surface, the sliding member **characterized in that**:
the particle aggregate contains copper-based alloy particles, which have copper (Cu) as a main component and contain 3.5% by mass or more of nickel (Ni) and 0.001% by mass or more of silicon (Si), and in which a mass ratio of Ni to Si (Ni/Si) is 5 to 50000 (inclusive); and
the copper-based alloy particles contain a precipitate of nickel silicide in a matrix containing at least copper and nickel.

2. The sliding member according to claim 1, wherein the mass ratio of Ni to Si (Ni/Si) in the copper-based alloy particles is 7 to 100 (inclusive).

3. The sliding member according to claim 1 or 2, wherein the copper-based alloy particles have a silicon content of 0.002% by mass or more.

4. The sliding member according to any one of claims 1 to 3, wherein the copper-based alloy particles have a silicon content of 0.5 to 1.3% by mass (inclusive).

5. The sliding member according to any one of claims 1 to 4, wherein the copper-based alloy particles have a nickel content of 35% by mass or less.

6. The sliding member according to any one of claims 1 to 5, wherein the copper-based alloy particles have a nickel content of 25% by mass or less.

7. The sliding member according to any one of claims 1 to 6, wherein the particle aggregate further contains one or more types of hard particles selected from the group consisting of iron (Fe)-based alloys, cobalt (Co)-based alloys, molybdenum (Mo)-based alloys, chromium (Cr)-based alloys, nickel (Ni)-based alloys, and ceramics.

8. The sliding member according to any one of claims 1 to 7, wherein at least some of the particles constituting the particle aggregate have nanocrystals and/or amorphous solids near interfaces between adjacent particles.

9. The sliding member according to any one of claims 1 to 8, wherein the coating film has a porosity of 4% or less.

10. The sliding member according to any one of claims 1 to 9, wherein the coating film is formed by spraying raw material particles containing solid-solution particles of a copper-based alloy onto a base material, and causing the solid-solution particles to plastically deform and accumulate.

11. An internal combustion engine **characterized by** being provided with the sliding member according to any one of claims 1 to 10.
